# EUROPEAN PATENT SPECIFICATION

(11) **EP 3 956 917 B1**
(45) Date of publication and mention of the grant of the patent: **03.07.2024**
(21) Application number: 20813768.7
(22) Date of filing: 28.05.2020
(51) Int. Cl.: G01K 3/04, G01K 11/14, G01K 11/165, G01K 1/14, G01K 1/18, H01H 9/16, H01H 71/04

(54) **THERMOCHROMIC TEMPERATURE INDICATION FOR LOW VOLTAGE CONNECTIONS**
THERMOCHROME TEMPERATURANZEIGE FÜR NIEDERSPANNUNGSANSCHLÜSSE
INDICATION DE TEMPÉRATURE THERMOCHROMIQUE POUR CONNEXIONS BASSE TENSION

(30) Priority: 30.05.2019 US 201916426752
(43) Date of publication of application: 23.02.2022
(73) Proprietor: Schneider Electric USA, Inc., Andover, MA 01810 (US)
(72) Inventor: HOLLINGER, Daniel, Cedar Rapids, Iowa 52404 (US); SCHMIDT, Alan, Marion, Iowa 52302 (US)
(74) Representative: Manitz Finsterwald Patent- und Rechtsanwaltspartnerschaft mbB
(86) International application number: PCT/US2020/034861
(87) International publication number: WO 2020/243259

(56) References cited:
- WO-A1-2019/078870
- JP-A- H05 157 633
- JP-U- S 494 683
- JP-U- S5 578 928
- US-A- 4 028 118
- US-A1- 2009 056 115
- US-A1- 2013 328 657
- US-A1- 2013 328 657
- US-A1- 2017 306 221
- US-B1- 6 260 414
- US-B1- 6 430 019

## Description

### TECHNICAL FIELD

The present disclosure relates to thermal monitoring of electrical components in an enclosure and, more particularly, to color changing materials that change color based on the temperature of electrical components with which they are in contact.

### BACKGROUND

Thermal monitoring is an important activity and part of many customers' routine preventative maintenance activities. A common approach is to perform the thermal monitoring on a schedule with IR scanning equipment. The electrical cabinet door is opened and the equipment is scanned with an IR measurement tool, looking for hot spots that need attention. Typically, IR scanning requires the electrical device to be energized and generating heat, with the possibility of potential exposure to electrically live components.

WO 2019/078870 A1 discloses a build unit for a three-dimensional printing system. The build unit includes a housing forming a build chamber, a build platform moveable within the build chamber, a thermally conductive element in direct contact with the interior of the build chamber, and a thermally conductive path connecting the thermally conductive element to the exterior of the build chamber. A representation of the temperature on the inside of the build chamber is made visible at the exterior of the build chamber by a heat from the inside of the build chamber through the thermally conductive element through the thermally conductive path.

### SUMMARY

The present disclosure provides an indicator tab and an electrical system according to the independent claims. Embodiments are given in the subclaims, the description and the drawings.

In accordance with one embodiment described herein, a thermal monitoring system enables passive thermal scanning of electrically live equipment from an observation point outside of an electrical enclosure. The system is comprised of one or more indicator tabs that include thermochromic materials that change color based on the temperature of electrical components with which they are in thermal contact. Each indicator tab comprises an arm composed of a material having a high thermal conductivity. A visible portion of the indicator tab located on one end of the arm includes the thermochromic material. A fastening portion of the indicator tab is located on an opposite end of the arm and thermally contacts the electrical component within the enclosure. An observation port in a cover of the enclosure, is juxtaposed with the visible portion of the indicator tab to enable visual observation of the color of thermochromic material from outside of the enclosure, which indicates the temperature of the electrical component.

Each indicator tab is composed of a material having a high thermal conductivity to efficiently conduct heat from the fastening portion toward the visible portion of the indicator tab where the thermochromic material is located. According to the claimed invention, the arm is composed of a high electrical resistivity material to prevent an electrical short circuit between the electrical component and other nearby electrical components, when the indicator tab is used in an electrical enclosure where the components are closely positioned.

Alternately, when the indicator tab is used in an electrical enclosure where the components are not closely positioned, the arm may be composed of a metallic material having a high thermal conductivity to efficiently conduct heat from the fastening portion toward the visible portion of the indicator tab where the thermochromic material is located.

The embodiment enables personnel to quickly detect the temperature of current-carrying components at any time without requiring equipment shutdown. The observation port or window of the enclosure enables visual observation of the color of the indicator tabs from outside of the enclosure without exposure to hazardous live parts.

### DESCRIPTION OF THE FIGURES

A more detailed description of the disclosure, briefly summarized above, may be had by reference to various embodiments, some of which are illustrated in the appended drawings.
FIG. 1 is a front view of the enclosure and its observation port through which the colors of the indicator tabs may be seen indicating the temperatures of the electrical components within the enclosure.
FIG. 2 is a front, perspective view of the enclosure of Figure 1, with the indicator tabs seen through the observation port indicating the temperatures of the electrical components within the enclosure.
FIG. 3A is a top view of a first embodiment of the indicator tab.
FIG. 3B is a side view of the first embodiment of the indicator tab of FIG. 3A, showing its installation on the electrical component.
FIG. 4A is a top view of a second embodiment of the indicator tab, with a coating of the thermochromic material.
FIG. 4B is a side view of the second embodiment of the indicator tab of FIG. 4A, showing its installation on the electrical component.

Identical reference numerals have been used, where possible, to designate identical elements that are common to the figures. However, elements disclosed in one embodiment may be beneficially utilized on other embodiments without specific recitation.

### DETAILED DESCRIPTION

In accordance with one embodiment described herein, the temperatures of electrically live components within an electrical enclosure, may be safely monitored from outside of the electrical enclosure, through an observation port. The colors of indicator tabs may be seen through the observation port, indicating the temperatures of the electrical components with which they are in contact within the enclosure. The indicator tabs include thermochromic materials that change color based on the temperature of electrical components with which they are in thermal contact. Each indicator tab comprises an arm composed of a material having a high thermal conductivity. A visible portion of the indicator tab located on one end of the arm includes the thermochromic material. A fastening portion of the indicator tab is located on an opposite end of the arm and thermally contacts the electrical component within the enclosure. The observation port of the enclosure is juxtaposed with the visible portion of the indicator tab to enable visual observation of the color of thermochromic material from outside of the enclosure, which indicates the temperature of the electrical component.

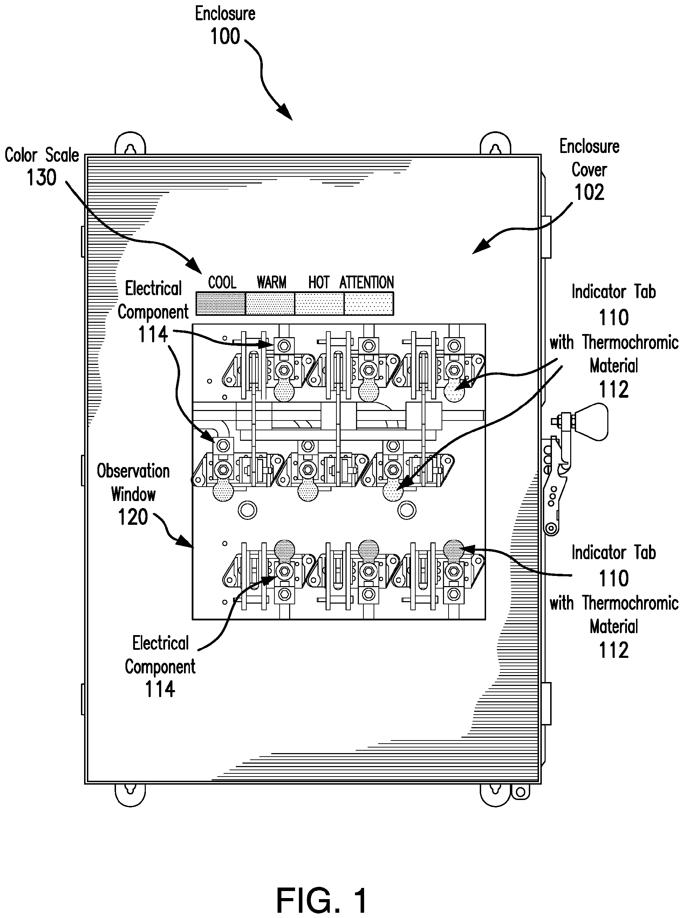

FIG. 1 is a front view of the enclosure 100 and its observation port 120 through which the colors of the indicator tabs 110 may be seen indicating the temperatures of the electrical components 114 within the enclosure. Each indicator tab 110 comprises thermochromic material 112 in thermal contact with the low voltage electrical component 114 in the enclosure 100, as seen through the observation port 120 in the enclosure. The application of the indicator tab 110 for indicating the temperature of electrical components 114 is for operating voltages generally in a range below 600 volts. Heat that increases the temperature of an electrical component 114 may be generated by resistive heating within the component, or it may be heat radiated or conducted from other, nearby components.

The observation port or window 120 in a cover 102 of the enclosure 100, is juxtaposed with the indicator tab 110 to enable visual observation of the thermochromic material 112 from outside of the enclosure 100, to observe a color of the thermochromic material 112 indicating a temperature of the low voltage electrical component 114. A color scale 130 is positioned on the cover 102 to facilitate correlating the observed color of the thermochromic material 112. The color scale represents temperatures considered "cool", " warm", "hot", and " attention" conditions of the low voltage electrical component 114. For example, a relative scale without actual temperature values may be Blue = 0-25%, Yellow = 25-50%, Orange = 50-75%, Red 75+%, where each value represents a percentage of a thermal limit for the monitored component.

Depending on the thermochromic material 112, the color change occurs at a specific temperature, which is called thermochromic transition temperature. When this transition temperature is reached, the color change may quickly occur. The transition temperature of most inorganic thermochromic materials is higher than that of most organic thermochromic materials. To monitor higher temperatures of electrical components, inorganic thermochromic materials may be preferred.

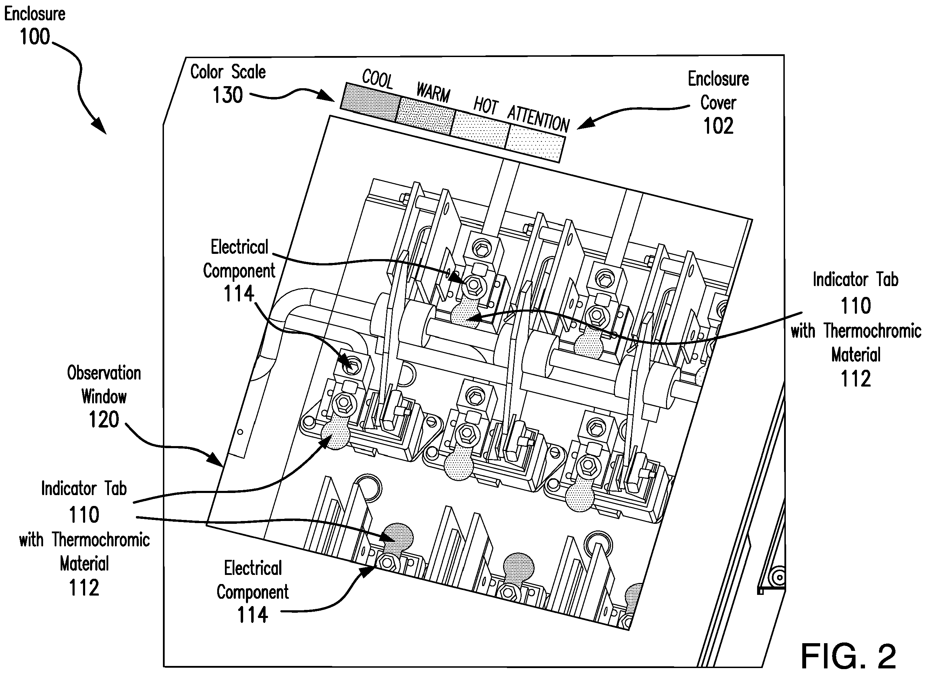

FIG. 2 is a front, perspective view of the enclosure 100 of Figure 1, and the indicator tabs 110 seen through the observation port 120 indicating the temperatures of the electrical components 114 within the enclosure. The indicator tab 110 comprises thermochromic 112 material in thermal contact with the electrical component 114 in the enclosure 100. The enclosure 100 may be a safety switch, load center enclosure, an HVAC cabinet, an industrial control panel, enclosed motor control device, an electrical transformer cabinet, and the like. The observation port 120 is positioned in the cover 102 of such enclosures 100, juxtaposed with the visible portion of the indicator tab 110 to enable visual observation of the color of thermochromic material from outside of the enclosure 100, which indicates the temperature of the electrical component 114.

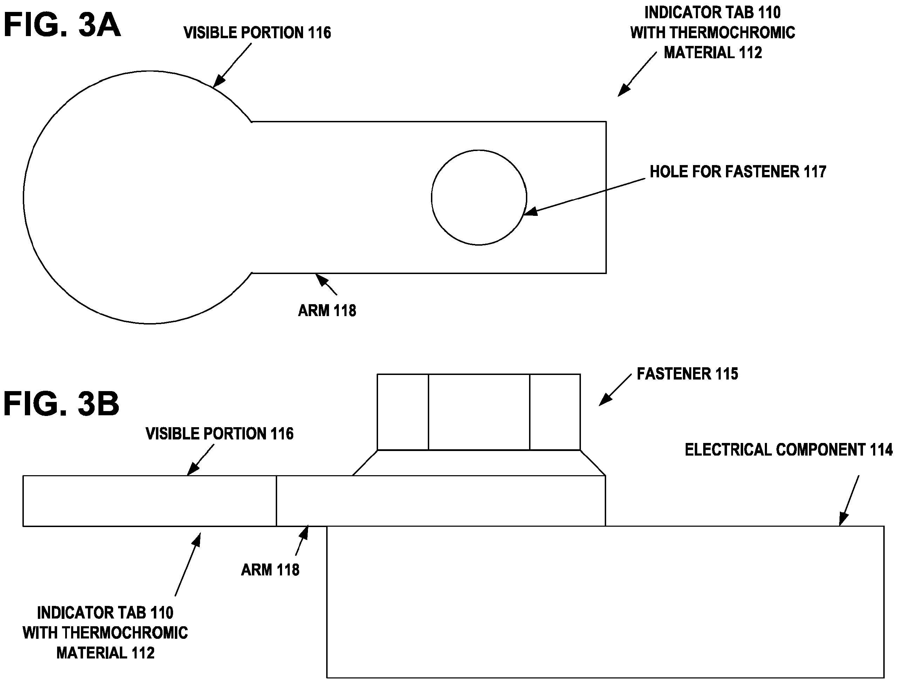

FIG. 3A is a top view of a first embodiment of the indicator tab 110. The indicator tab 110 includes a visible portion 116 that may have a generally circular shape on one end of the arm 118. The visible portion 116 may have other shapes, such as a square, a rectangle, or other polygon configured to be sufficiently visible through the observation port, indicating the temperatures of the electrical components. The visible portion 116 includes the thermochromic material 112 indicating the temperature of the electrical component 114, which may be an embedded thermochromic additive in the composition of the body portion of the visible portion 116. The other end of the arm 118 includes a fastening portion 117, such as a hole in the arm 118, through which may pass a fastener 115 to fasten the indicator tab 110 to the electrical component 114 for good thermal contact.

FIG. 3B is a side view of the first embodiment of the indicator tab 110 of FIG. 3A, showing its installation on the electrical component 114 by means of the fastener 115 that passes through the hole 117. Other forms of fastening may also be used, such as welding or a clamp to the component 114 being monitored. The electrical component 114 may, for example, be an electrical lug, a busbar, a wire, a blade, or an electrical termination. When the electrical component 114 is energized, current flowing through it generates resistive heating. The fastener 115 at the site of the hole 117, forces the underside of the arm 118 against its mounted position on the electrical component 114 to insure an efficient heat transfer from the electrical component 114 to the arm 118. The material composing the arm 118 is chosen to have a relatively high thermal conductivity, selected to efficiently conduct the heat entering the arm 118 at the site of the hole 117 toward the visible portion 116 of the indicator tab 110 where the thermochromic material 112 is located. When the indicator tab is used in an electrical enclosure where the components 114 are closely spaced together, the arm 118 may be composed of a high electrical resistivity material to avoid inadvertently creating an electrical short circuit between the electrical component 114 and other nearby electrical components. Alternately, when the indicator tab is used in an electrical enclosure where the components 114 are not closely positioned, the arm 118 may be composed of a metallic material.

Organic polymer materials such as epoxy resin, polyurethane, and polyacrylic resin generally have a relatively high electrical resistivity, but also generally have a relatively low thermal conductivity. However, by introducing inorganic fillers having relatively high thermal conductivities, and by introducing an embedded thermochromic additive, a composite composition may be produced that is suitable for the arm 118 and the visible portion 116 of the indicator tab 110.

Suitable inorganic fillers for organic polymer materials may include aluminum oxide, aluminum nitride, boron nitride, silicon carbide, silicon nitride, and beryllium oxide. These materials have high intrinsic thermal conductivities and high electrical resistivity, making them suitable for the indicator tab 110. Other suitable inorganic fillers for organic polymer materials for use in the indicator tab 110 may include ceramics, such as silicon dioxide, zinc oxide, silicon carbide, and magnesium oxide, which is a standard material for commercial electrical heaters.

The thermochromic material 112 may be the polymer itself, an embedded thermochromic additive, or an ordered structure of the polymer with an incorporated thermochromic additive, and a suitable inorganic filler, such as a polymer-glass composite. The color change may be based on changes in light reflection, light absorption, or light scattering properties with changes in temperature. In some embodiments, the thermochromic material 112 may be a thermochromic organic material in which certain organic dyes made from liquid crystals change color reversibly when their temperature is changed. In some embodiments, the thermochromic material 112 may be a thermosensitive material with irreversible color change used to indicate and record a temperature extreme that has occurred in the electrical component 114.

The thermochromic material 112 may be an inorganic thermochromic material introduced as an embedded additive to form a composite composition suitable for the arm 118 and visible portion 116 of the indicator tab 110. The transition temperature of example inorganic thermochromic materials is provided in the technical publication by Jesse H. Day, Thermochromism of Inorganic Compounds, Chem. Rev., 1968, 68 (6), pp 649-657. For example, thermochromic inorganic oxides, such as vanadium dioxide (VO2) undergo a reversible transition at a phase transition temperature of 68 degrees C. When the temperature of the material is lower than the phase transition temperature, it is infrared transparent, and when the temperature is higher than the phase transition temperature, it is infrared reflecting. Another example of thermochromism arising from a phase transition is Ag₂HgI₄. The room temperature color is dark red. Heating a crystal of Ag₂HgI₄ to 50 °C causes a phase transition with a color change to orange. As the material is further heated to 75 °C causes phase transition color change to black. See Alexander N. Bourque, Investigations of Reversible Thermochromism in Three-Component Systems, PhD Thesis, Dalhousie University, Halifax, Nova Scotia, March 2014. Copper iodide is a solid tan-gray material transforming at 60-62 °C to orange color. Ammonium metavanadate is a white material, turning to brown at 150 °C and then to black at 170 °C. Manganese violet (Mn(NH₄)₂P₂O₇) is a violet material, turning to white at 400 °C.

The thermochromic material 112 may be an organic thermochromic material such as organic liquid crystals or dyes embedding the body of the visible portion 116 of the indicator tab 110. Heating the materials changes the arrangement of the molecules, which alters the color of light the materials reflect. However, these organic materials typically degrade at temperatures around 100 °C.

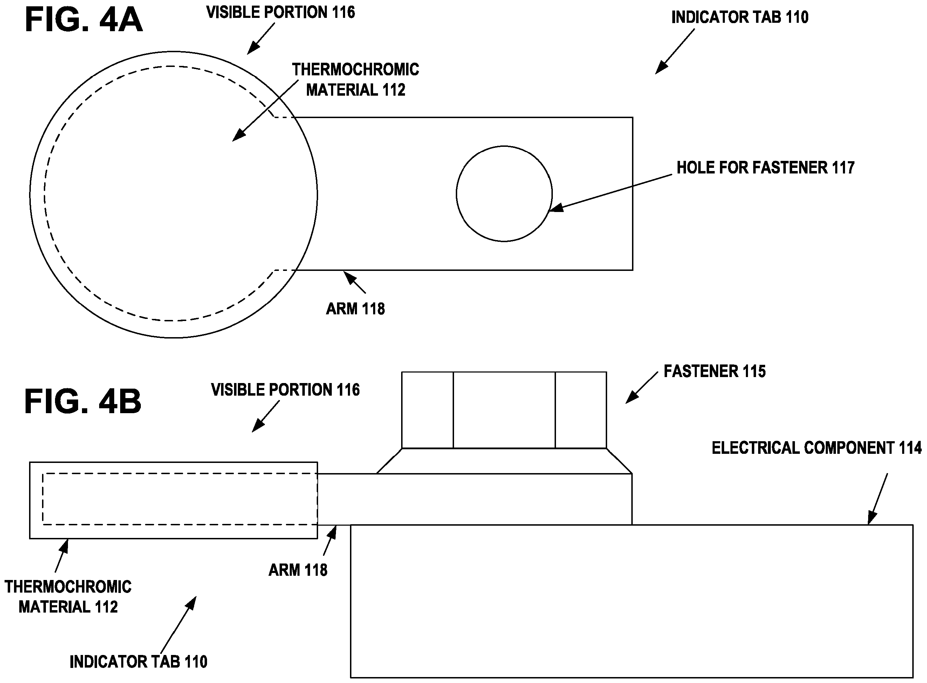

FIG. 4A is a top view of a second embodiment of the indicator tab 110, with a coating of the thermochromic material 112, such as an organic thermoplastic or thermoset coating on the substrate body 113 of the visible portion 116 of the indicator tab 110. The thermochromic material 112 is a coating on a substrate body 113 of the visible portion 116, the coating being at least one of a thermochromic polymer coating, an embedded thermochromic additive in a coating, or an ordered structure of a polymer with an incorporated thermochromic additive in a coating. When the indicator tab is used in an electrical enclosure where the components 114 are closely spaced together, the body of the indicator tab 110 may be a structural insulator such as mica, which is both a thermally conductive and electrically insulating material. The visible portion 116 of the indicator tab 110 may be coated with the thermochromic material 112, such as an epoxy resin, polyurethane, or polyacrylic resin embedded with an inorganic or an organic thermochromic additive. FIG. 4B is a side view of the second embodiment of the indicator tab 110 of FIG. 4A, showing the coating of an inorganic or an organic thermochromic material 112 on the substrate body 113 of the visible portion 116 of the indicator tab 110.

## Claims

1. An indicator tab (110) for thermal monitoring of an electrical component (114), comprising:
an arm (118) composed of a material having a high thermal conductivity and a high electrical resistivity;
a visible portion (116) located on one end of the arm (118), the visible portion (116) including a thermochromic material (112); and
a fastening portion located on an opposite end of the arm (118) from the visible portion (116), the fastening portion being configured, in use, to thermally contact the electrical component (114) whose temperature is indicated by a color of the thermochromic material (112) of the visible portion (116);
wherein the high thermal conductivity of the arm (118) allows, in use, heat to be conducted from the fastening portion toward the visible portion (116) where the thermochromic material (112) is located, and
wherein the high electrical resistivity of the arm (118) allows, in use, to prevent an electrical short circuit between the electrical component (114) and other nearby electrical components.

2. The indicator tab (110) of claim 1, wherein the thermochromic material (112) is a coating on a substrate body of the visible portion (116), the coating being at least one of a thermochromic polymer coating, an embedded thermochromic additive in a coating, or an ordered structure of a polymer with an incorporated thermochromic additive in a coating.

3. The indicator tab (110) of claim 1, wherein the visible portion (116) includes the thermochromic material (112) as an embedded thermochromic additive in a body portion of the visible portion (116).

4. The indicator tab (110) of claim 1, wherein the thermochromic material (112) is an

5. Theindicator tab (110) of claim 1, wherein the thermochromic material (112) is a thermoplastic coating on the indicator tab (110).

6. The indicator tab (110) of claim 1, wherein the thermochromic material (112) is configured, in use, to produce a color change based on at least one of changes in light reflection, light absorption, or light scattering properties with changes in temperature.

7. The indicator tab (110) of claim 1, wherein the thermochromic material (112) is a thermochromic organic material in which organic dyes made from liquid crystals, in use, change color reversibly when their temperature is changed.

8. The indicator tab (110) of claim 1, wherein the thermochromic material (112) is a thermosensitive material with irreversible color change that, in use, indicates and records a temperature extreme that has occurred in the electrical component (114).

9. The indicator tab (110) of claim 1, wherein the thermochromic material (112) is an inorganic thermochromic material.

10. The indicator tab (110) of claim 1, wherein the visible portion (116) has a generally polygonal shape on the one end of the arm (118), with the opposite end of the arm (118) being configured to be mounted on the electrical component (114).

11. The indicator tab (110) of claim 1, wherein the material of the arm (118) comprises a composite including an organic polymer material with high electrical resistivity and an inorganic filler having high thermal conductivity.

12. The indicator tab (110) of claim 11, wherein the composite further includes an embedded thermochromic additive.

13. The indicator tab (110) of any one of claims 1 through 12, wherein the fastening portion includes a hole (117) configured, in use, to receive a fastener (115) for connecting the indicator tab (110) to the electrical component (114) so that the fastening portion is in thermal contact with the electrical component (114), or
wherein the indicator tab (110) is configured, in use, to be connected to the electrical component (114) using a clamp so that the fastening portion is in thermal contact with the electrical component (114).

14. An electrical system comprising:
an electrical component (114);
the indicator tab (110) of any one of claims 1 through 13; and
an electrical enclosure (100) for housing the electrical component (114) and the indicator tab (110), the electrical enclosure (100) including a cover (102) having an observation port (120) which is juxtaposed with the visible portion (116) of the indicator tab (110) enabling visual observation of the color of the thermochromic material (112) from outside of the enclosure (100).

15. The electrical system of claim 14, wherein the electrical enclosure (100) is a safety switch, load center, HVAC, enclosed motor control device, or electrical transformer.

16. The electrical system of any one of claims 14 and 15, comprising a plurality of electrical components (114) and a plurality of indicator tabs (110) of any one of claims 1 through 13, wherein each indicator tab (110) from the plurality of the indicator tabs (110) is configured, in use, to be thermally connected to a respective electrical component (114) from the plurality of the electrical components (114), the observation port (120) enabling visual observation of the color of the thermochromic material (112) of each of the indicator tabs (112) from outside of the enclosure (100).

## Patentansprüche

1. Anzeigestreifen (110) zur thermischen Überwachung eines elektrischen Bauteils (114), umfassend:
einen Arm (118), der aus einem Material mit einer hohen Wärmeleitfähigkeit und einem hohen elektrischen Widerstand besteht;
einen sichtbaren Abschnitt (116), der an einem Ende des Arms (118) angeordnet ist, wobei der sichtbare Abschnitt (116) ein thermochromes Material (112) enthält; und
einen Befestigungsabschnitt, der an einem dem sichtbaren Abschnitt (116) gegenüberliegenden Ende des Arms (118) angeordnet ist, wobei der Befestigungsabschnitt so konfiguriert ist, dass er im Gebrauch das elektrische Bauteil (114) thermisch kontaktiert, dessen Temperatur durch eine Farbe des thermochromen Materials (112) des sichtbaren Abschnitts (116) angezeigt wird;
wobei die hohe Wärmeleitfähigkeit des Arms (118) es im Gebrauch ermöglicht, dass Wärme von dem Befestigungsabschnitt zu dem sichtbaren Abschnitt (116) geleitet wird, wo das thermochrome Material (112) angeordnet ist, und
wobei der hohe elektrische Widerstand des Arms (118) es im Gebrauch ermöglicht, einen elektrischen Kurzschluss zwischen dem elektrischen Bauteil (114) und anderen nahegelegenen elektrischen Bauteilen zu verhindern.

2. Anzeigestreifen (110) nach Anspruch 1, wobei das thermochrome Material (112) eine Beschichtung auf einem Substratkörper des sichtbaren Abschnitts (116) ist, wobei die Beschichtung eine thermochrome Polymerbeschichtung und/oder ein eingebetteter thermochromer Zusatzstoff in einer Beschichtung und/oder eine geordnete Struktur eines Polymers mit einem eingebauten thermochromen Zusatzstoff in einer Beschichtung ist.

3. Anzeigestreifen (110) nach Anspruch 1, wobei der sichtbare Abschnitt (116) das thermochrome Material (112) als eingebetteten thermochromen Zusatzstoff in einem Körperabschnitt des sichtbaren Abschnitts (116) enthält.

4. Anzeigestreifen (110) nach Anspruch 1, wobei das thermochrome Material (112) ein organisches Material ist.

5. Anzeigestreifen (110) nach Anspruch 1, wobei das thermochrome Material (112) eine thermoplastische Beschichtung auf dem Anzeigestreifen (110) ist.

6. Anzeigestreifen (110) nach Anspruch 1, wobei das thermochrome Material (112) so konfiguriert ist, dass es im Gebrauch einen Farbwechsel auf der Grundlage von Änderungen der Lichtreflexion und/oder der Lichtabsorption und/oder von Lichtstreuungseigenschaften bei Änderungen der Temperatur erzeugt.

7. Anzeigestreifen (110) nach Anspruch 1, wobei das thermochrome Material (112) ein thermochromes organisches Material ist, bei dem organische Farbstoffe, die aus Flüssigkristallen hergestellt sind, im Gebrauch ihre Farbe reversibel ändern, wenn ihre Temperatur geändert wird.

8. Anzeigestreifen (110) nach Anspruch 1, wobei das thermochrome Material (112) ein wärmeempfindliches Material mit irreversiblem Farbwechsel ist, das im Gebrauch ein Temperaturextrem anzeigt und aufzeichnet, das in dem elektrischen Bauteil (114) aufgetreten ist.

9. Anzeigestreifen (110) nach Anspruch 1, wobei das thermochrome Material (112) ein anorganisches thermochromes Material ist.

10. Anzeigestreifen (110) nach Anspruch 1, wobei der sichtbare Abschnitt (116) an dem einen Ende des Arms (118) eine allgemein polygonale Form aufweist, wobei das gegenüberliegende Ende des Arms (118) so konfiguriert ist, dass es an dem elektrischen Bauteil (114) angebracht werden kann.

11. Anzeigestreifen (110) nach Anspruch 1, wobei das Material des Arms (118) einen Verbundstoff umfasst, der ein organisches Polymermaterial mit hohem elektrischen Widerstand und einen anorganischen Füllstoff mit hoher Wärmeleitfähigkeit enthält.

12. Anzeigestreifen (110) nach Anspruch 11, wobei der Verbundstoff außerdem einen eingebetteten thermochromen Zusatzstoff enthält.

13. Anzeigestreifen (110) nach einem der Ansprüche 1 bis 12, wobei der Befestigungsabschnitt ein Loch (117) aufweist, das so konfiguriert ist, dass es im Gebrauch ein Befestigungselement (115) zum Verbinden des Anzeigestreifens (110) mit dem elektrischen Bauteil (114) aufnimmt, so dass der Befestigungsabschnitt in thermischem Kontakt mit dem elektrischen Bauteil (114) steht, oder wobei der Anzeigestreifen (110) so konfiguriert ist, dass er im Gebrauch mit dem elektrischen Bauteil (114) unter Verwendung einer Klemme verbunden ist, so dass der Befestigungsabschnitt in thermischem Kontakt mit dem elektrischen Bauteil (114) steht.

14. Elektrisches System, das umfasst:
ein elektrisches Bauteil (114);
den Anzeigestreifen (110) nach einem der Ansprüche 1 bis 13; und
ein elektrisches Gehäuse (100) zur Unterbringung des elektrischen Bauteils (114) und des Anzeigestreifens (110), wobei das elektrische Gehäuse (100) eine Abdeckung (102) mit einer Beobachtungsöffnung (120) aufweist, die neben dem sichtbaren Abschnitt (116) des Anzeigestreifens (110) angeordnet ist und die visuelle Beobachtung der Farbe des thermochromen Materials (112) von außerhalb des Gehäuses (100) ermöglicht.

15. Elektrisches System nach Anspruch 14, wobei das elektrische Gehäuse (100) ein Sicherheitsschalter, ein Lastzentrum, eine HVAC-Anlage, ein geschlossenes Motorsteuergerät oder ein elektrischer Transformator ist.

16. Elektrisches System nach einem der Ansprüche 14 und 15, umfassend eine Vielzahl von elektrischen Bauteilen (114) und eine Vielzahl von Anzeigestreifen (110) nach einem der Ansprüche 1 bis 13, wobei jeder Anzeigestreifen (110) aus der Vielzahl der Anzeigestreifen (110) so konfiguriert ist, dass er im Gebrauch mit einem entsprechenden elektrischen Bauteil (114) aus der Vielzahl der elektrischen Bauteile (114) thermisch verbunden ist, wobei die Beobachtungsöffnung (120) eine visuelle Beobachtung der Farbe des thermochromen Materials (112) von jedem der Anzeigestreifen (112) von außerhalb des Gehäuses (100) ermöglicht.

## Revendications

1. Languette indicatrice (110) pour la surveillance thermique d'un composant électrique (114), comprenant :
un bras (118) composé d'un matériau ayant une conductivité thermique élevée et une résistivité électrique élevée ;
une partie visible (116) située à une extrémité du bras (118), la partie visible (116) incluant un matériau thermochrome (112) ; et
une partie de fixation située à une extrémité opposée du bras (118) par rapport à la partie visible (116), la partie de fixation étant configurée, en utilisation, pour entrer en contact thermique avec le composant électrique (114) dont la température est indiquée par une couleur du matériau thermochrome (112) de la partie visible (116) ;
dans laquelle la conductivité thermique élevée du bras (118) permet, en utilisation, à la chaleur d'être conduite de la partie de fixation vers la partie visible (116) où le matériau thermochrome (112) est situé, et
dans laquelle la résistivité électrique élevée du bras (118) permet, en utilisation, d'empêcher un court-circuit électrique entre le composant électrique (114) et d'autres composants électriques proches.

2. Languette indicatrice (110) selon la revendication 1, dans laquelle le matériau thermochrome (112) est un revêtement sur un corps de substrat de la partie visible (116), le revêtement étant au moins l'un des suivants : un revêtement polymère thermochrome, un additif thermochrome incorporé dans un revêtement ou une structure ordonnée d'un polymère avec un additif thermochrome incorporé dans un revêtement.

3. Languette indicatrice (110) selon la revendication 1, dans laquelle la partie visible (116) inclut le matériau thermochrome (112) en tant qu'additif thermochrome incorporé dans une partie de corps de la partie visible (116).

4. Languette indicatrice (110) selon la revendication 1, dans laquelle le matériau thermochrome (112) est un matériau organique.

5. Languette indicatrice (110) selon la revendication 1, dans laquelle le matériau thermochrome (112) est un revêtement thermoplastique sur la languette indicatrice (110).

6. Languette indicatrice (110) selon la revendication 1, dans laquelle le matériau thermochrome (112) est configuré, en utilisation, pour produire un changement de couleur sur la base de changements de réflexion de lumière, d'absorption de lumière et/ou de propriétés de diffusion de lumière avec des changements de température.

7. Languette indicatrice (110) selon la revendication 1, dans laquelle le matériau thermochrome (112) est un matériau organique thermochrome dans lequel des colorants organiques constitués de cristaux liquides, en utilisation, changent de couleur de manière réversible lorsque leur température change.

8. Languette indicatrice (110) selon la revendication 1, dans laquelle le matériau thermochrome (112) est un matériau thermosensible avec un changement de couleur irréversible qui, en utilisation, indique et enregistre un extrême de température qui s'est produit dans le composant électrique (114).

9. Languette indicatrice (110) selon la revendication 1, dans laquelle le matériau thermochrome (112) est un matériau thermochrome inorganique.

10. Languette indicatrice (110) selon la revendication 1, dans laquelle la partie visible (116) a une forme généralement polygonale à une extrémité du bras (118), l'extrémité opposée du bras (118) étant configurée pour être montée sur le composant électrique (114).

11. Languette indicatrice (110) selon la revendication 1, dans laquelle le matériau du bras (118) comprend un composite incluant un matériau polymère organique ayant une résistivité électrique élevée et une charge inorganique ayant une conductivité thermique élevée.

12. Languette indicatrice (110) selon la revendication 11, dans laquelle le composite inclut en outre un additif thermochrome incorporé.

13. Languette indicatrice (110) selon l'une quelconque des revendications 1 à 12, dans laquelle la partie de fixation inclut un trou (117) configuré, en utilisation, pour recevoir un élément de fixation (115) afin de connecter la languette indicatrice (110) au composant électrique (114) de sorte que la partie de fixation soit en contact thermique avec le composant électrique (114), ou dans laquelle la languette indicatrice (110) est configurée, en utilisation, pour être connectée au composant électrique (114) à l'aide d'un élément de serrage de sorte que la partie de fixation soit en contact thermique avec le composant électrique (114).

14. Système électrique comprenant :
un composant électrique (114) ;
la languette indicatrice (110) selon l'une quelconque des revendications 1 à 13 ; et
une enceinte électrique (100) pour loger le composant électrique (114) et la languette indicatrice (110), l'enceinte électrique (100) incluant un couvercle (102) comportant un orifice d'observation (120) qui est juxtaposé à la partie visible (116) de la languette indicatrice (110) pour permettre l'observation visuelle de la couleur du matériau thermochrome (112) depuis l'extérieur de l'enceinte (100).

15. Système électrique selon la revendication 14, dans lequel l'enceinte électrique (100) est un interrupteur de sécurité, un tableau de répartition, un système CVC, un dispositif de commande de moteur fermé ou un transformateur électrique.

16. Système électrique selon l'une quelconque des revendications 14 et 15, comprenant une pluralité de composants électriques (114) et une pluralité de languettes indicatrices (110) selon l'une quelconque des revendications 1 à 13, dans lequel chaque languette indicatrice (110) de la pluralité de languettes indicatrices (110) est configurée, en utilisation, pour être connectée thermiquement à un composant électrique respectif (114) de la pluralité de composants électriques (114), l'orifice d'observation (120) permettant l'observation visuelle de la couleur du matériau thermochrome (112) de chacune des languettes indicatrices (112) depuis l'extérieur de l'enceinte (100).
